# EUROPEAN PATENT SPECIFICATION

(11) **EP 3 798 161 B1**
(45) Date of publication and mention of the grant of the patent: **28.01.2026**
(21) Application number: 19203267.0
(22) Date of filing: 15.10.2019
(51) Int. Cl.: B65G 47/84, B65G 47/96, B65G 17/34

(54) **AN APPARATUS FOR TRANSPORT AND CONTROLLED DISCHARGE OF PRODUCTS**
VORRICHTUNG ZUM TRANSPORT UND GESTEUERTE PRODUKTABGABE
APPAREIL POUR LE TRANSPORT ET L'ÉVACUATION CONTRÔLÉE DE PRODUITS

(30) Priority: 27.09.2019 EP 19200063
(43) Date of publication of application: 31.03.2021
(73) Proprietor: Eurosort B.V., 1243 HV 's-Graveland (NL)
(72) Inventor: VAN HAASTER, Patrick Theodorus Johannes, 2191 AS De Zilk (NL); DE JONG, Wiebe, 1014 ZL Amsterdam (NL)
(74) Representative: De Vries & Metman

(56) References cited:
- EP-A1- 0 507 413
- EP-B1- 0 507 413
- WO-A1-2016/179480
- DE-A1- 19 929 529
- FR-A3- 2 475 015
- US-A1- 2016 257 501

## Description

The invention relates to an apparatus for transport and controlled discharge of products, comprising at least a transport unit including an upper surface for supporting a product, a loading station where a product can be placed on the upper surface, a discharging station where a product can be discharged from the upper surface and driving means for transporting the transport unit in a conveying direction from the loading station to the discharging station, wherein the transport unit comprises a pushing member for pushing a product from the upper surface in transverse direction of the conveying direction when the transport unit is at the discharging station, a pushing member guide for guiding the pushing member in the transverse direction between a first extreme position and a second extreme position for removing a product from the upper surface when the pushing member is moved in a direction from the first extreme position to the second extreme position and a control system for selectively driving the pushing member along the pushing member guide during movement of the transport unit in the conveying direction.

Such an apparatus is known from DE 199 59 843. The known apparatus comprises a pushing member at each of the transport units for pushing a product from the upper surface of the transport unit. At the loading station the pushing member is located at the first extreme position such that an operator can place a product onto the upper surface. The control system can selectively drive the pushing member along the pushing member guide during movement of the transport unit in the conveying direction in order to discharge a product at a desired location at the discharging station. The displacement of the pushing member from the first to the second extreme position takes a certain period of time, i.e. a certain travelling distance of the transport unit in the conveying direction. Depending on the dimensions of the product and the location of the product on the upper surface in the transverse direction the exact location where the product leaves the transport unit at the discharging station during a displacement of the pushing member may vary. This requires a certain length of a receiving unit for receiving a discharged product at the discharging station as measured in the conveying direction. The known apparatus has a plurality of transport units and a plurality of receiving units at the discharging station so as to sort products for different destinations. This means that the required total length of the receiving units may form a considerable part of the apparatus.

The known apparatus may be applied for transporting and sorting products which have a maximum dimension which is relatively small with respect to the upper surface between the first extreme position and the second extreme position in the transverse direction. For handling such a product range transport units which have dedicated dimensions in the transverse direction may be applied. However, it may be efficient to use the same type of apparatus for product ranges having different maximum dimensions because of using standardized dimensions of at least a part of its components, although it is in fact over-dimensioned for handling the products of relatively small sizes.

US 2016/257501 is related to a device for sorting articles, comprising at least one station for automatically loading articles allowing transfer of the articles to one or several transport units, the station equipped with at least one means for transporting the articles and a system able to determine the position, the shape and the size of the articles, with a set of cross belt transport units, each unit provided with a supporting plate between two adjacent units. The device comprises a system allowing detection of a possible change in position of an article on a transport means during the acceleration phase. Maintaining the article in position on its unit(s) is ensured during its movement on the sorter, by supporting plates permanently ensuring supporting surface continuity between two units over a width substantially equal to the supporting surface of the belts and by the presence of vertical profiles on the belts.

DE 199 29 529 is related to an arrangement which has a number of transport elements with transverse transport surfaces for items of maximum length and width for delivery to the arrangement individually at one or more input points and delivery at a lateral output point on a transport path along which the transport elements are driven. The external side of the transverse transport device of a transport element has at least left and right transport places for items adjacent to each other in the longitudinal direction and may have a third between them.

WO 2016/179480 A1 discloses an apparatus for transport and controlled discharge of products according to preamble of claim 1. It is an object of the present invention to provide an apparatus for transport and controlled discharge of products which is optimized for handling products which have a maximum dimension that is relatively small with respect to the distance between the first and second extreme positions.

In order to achieve this object the apparatus is as defined in claim 1.

In the apparatus according to the invention the pushing member guide allows the pushing member to move between the first and second extreme positions, but the control system forces the pushing member to the intermediate position at at least the loading station. This creates a limited region of the upper surface between the first extreme position and the second extreme position which may be sufficient for receiving products which have a maximum dimension that is relatively small to the distance between the first and second extreme positions. The presence of the pushing member in the intermediate position urges an operator at the loading station to place a product within the limited region. Since a product is located at the well-defined limited region the length of the path along which products may leave the transport unit at the discharging station is relatively small. Consequently, a receiving unit for receiving a discharged product from the transport unit being located next to the path along which the transport unit travels, can be relatively short as measured in the conveying direction. In other words, they can be located closer to each other in the conveying direction. Hence, the apparatus can be optimized for handling products which have a maximum dimension that is relatively small to the distance between the first and second extreme positions, whereas standardized components can be used, such as the transport units including the pushing members and the pushing member guides. Furthermore, the limited region also prevents an operator from placing a too large product on the transport unit at the loading station.

The intermediate position may be closer to the first extreme position than the second extreme position such that the largest portion of the upper surface between the first and second extreme positions can still be used for receiving a product at the loading station.

The control system may be adapted such that the pushing member is located at the first extreme position or between the first extreme position and the intermediate position when the actual position of the transport unit is upstream of the loading station.

In a particular embodiment the control system is adapted such that the pushing member is located at the first extreme position or between the first extreme position and the intermediate position when the transport unit arrives at the discharging station. In this case the pushing member is moved back in a direction from the intermediate position to the first extreme position between the loading station and the discharging station. Independent from the selected intermediate position on the basis of the maximum size of a product from a product range to be transported, the pushing member may always have the same position when the transport unit arrives at the discharging station. This means that a part of the control system which selectively drives the pushing member along the pushing member for discharging a product from the transport unit at the discharging station may be similar for two apparatus which handle products of different size ranges. This is advantageous in view of using standardized components.

In a practical embodiment the apparatus comprises a loop-shaped transport path such that the transport unit successively follows the transport path from the loading station to the discharging station and back to the loading station.

The control system may be provided with an offset guide which is located at least upstream of the loading station and adapted such that it guides the pushing member to the intermediate position upon passing the offset guide. This is a simple structure to bring the pushing member in the intermediate position.

The offset guide may be adapted such that it guides the pushing member from the first extreme position to the intermediate position upon passing the offset guide.

The control system is provided with a plurality of oblique guides located at a distance from each other in the conveying direction at the discharging station and cooperating switchable guide actuators for selectively directing an actuator element of the pushing member of the passing transport unit to the corresponding oblique guide so as to guide the actuator element of the pushing member along the selected oblique guide upon passing the selected oblique guide. This allows the control system to selectively drive the pushing member along the pushing member guide during movement of the transport unit in the conveying direction. The actuator element may be an actuator wheel which is rotatably mounted to the pushing member in order to minimize friction between the oblique guides and the pushing member. If the position of the pushing member upon arrival at the discharging station is always the same, independent from the selection of the intermediate position, the location of the switchable guide actuators may be unchanged for different apparatus intended for handling product ranges have a different maximum product size.

In a particular embodiment the apparatus is provided with receiving units at the discharging station, wherein the length of each of the receiving units in the conveying direction is smaller than the distance between two successive oblique guides in the conveying direction. Since the pushing member can only touch a product on the upper surface between the intermediate position and the second extreme position the lengths of the receiving units may be relatively small.

The distance between two successive oblique guides in the conveying direction is smaller than a travelling distance of the transport unit in the conveying direction for displacing the pushing member from the first extreme position to the second extreme position. The travelling distance of the transport unit in the conveying direction for displacing the pushing member from the first extreme position to the second extreme position depends on the angle of inclination of the respective oblique guides.

The distance between two successive oblique guides in the conveying direction is equal to or larger than the travelling distance of the transport unit in the conveying direction for displacing the pushing member from the intermediate position to the second extreme position.

In a particular embodiment the pushing member is provided with a pushing element for pushing a product from the upper surface in transverse direction of the conveying direction when the transport unit is at the discharging station and with a flexible cross-belt to which the pushing element is mounted, which cross-belt is drivable in the transverse direction. The pushing element and the cross-belt are movable together in the transverse direction such that the pushing element is movable in the transverse direction between the first and second extreme positions. The pushing element may be an elongate bar or the like. In order to drive the cross-belt in the transverse direction the cross-belt may be provided with a slider which is movable along the pushing member guide, such that the cross-belt forms a transmission between the pushing element and the slider but alternative embodiments are conceivable.

The cross-belt may be adapted such that the upper surface for supporting a product is formed by an upper surface of the cross-belt next to the pushing element such that the pushing element is suitable for pushing against a product on the cross-belt in the event that a product on the cross-belt tends to move with respect to the cross-belt in opposite direction of the direction in which the cross-belt moves. This embodiment may be indicated as a cross-belt sorter. Under operating conditions, a product on the upper surface of the cross-belt next to the pushing element can be discharged from the upper surface by driving the cross-belt without any contact between the pushing element and the product. However, the pushing element is mounted to the cross-belt for pushing against a product on the cross-belt in the event that a product on the cross-belt tends to move with respect to the cross-belt in opposite direction of the direction in which the cross-belt moves, for example caused by rolling or slipping. Similar to the embodiments as described hereinbefore, when the pushing element is located at the intermediate position at the loading station a product can be placed on the conveyor belt next to the pushing element, i.e. between the intermediate position and the second extreme position.

The invention will hereafter be elucidated with reference to schematic drawings showing embodiments of the invention by way of example.
Fig. 1 is a perspective cut-away view of a part of an embodiment of the apparatus according to the invention.
Fig. 2 is a similar view as Fig. 1, but showing the part of the embodiment as seen from below.
Fig. 3 is a similar view as Fig. 2, but showing a part thereof on a larger scale.
Fig. 4 is an illustrative plan view of the embodiment as shown in Figs. 1-3.
Fig. 5 is a similar view as Fig. 4 of an alternative embodiment.
Fig. 6 is a perspective view of a part of an alternative embodiment of the apparatus according to the invention.

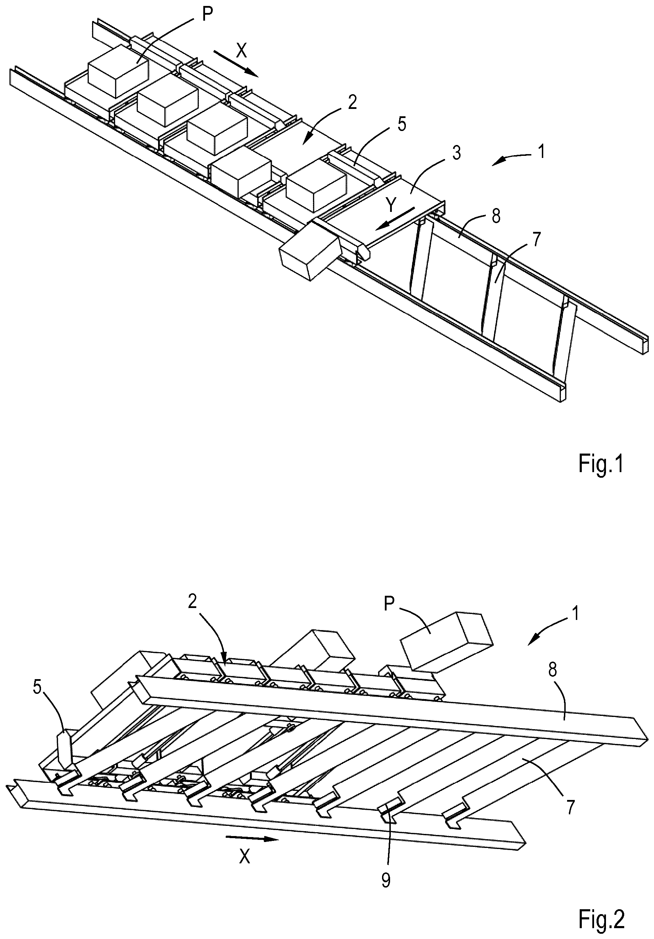

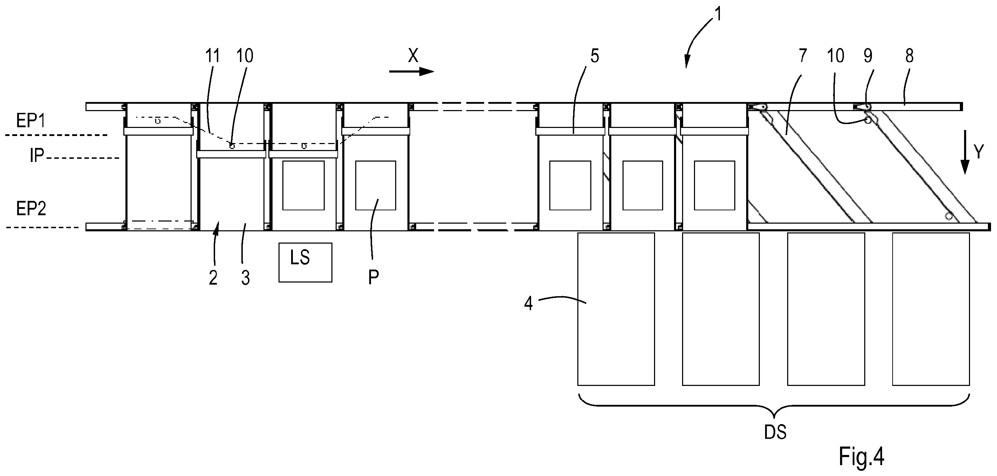

Figs. 1 and 2 show a part of an embodiment of the apparatus 1 according to the invention as seen from above and below, respectively. The apparatus 1 is suitable for transport and controlled discharge of products P and comprises a plurality of transport units 2 for supporting and transporting products P. Each transport unit 2 has a tray 3 including an upper surface. In this case the apparatus 1 is arranged such that products P can be placed on the upper surfaces of the trays 3 at a loading station LS. The loading station LS is indicated in Fig. 4 and may represent a location where products P are placed onto the passing transport units 2 by an operator. Fig. 4 illustrates the functioning of the apparatus 1 by showing successive positions of a transport unit 2 in a single picture.

Under operating conditions the products P are transported in a conveying direction X from the loading station LS to a discharging station DS where the products P can be selectively discharged from the trays 3 of the respective transport units 2. The discharging station DS is provided with a plurality of exits or receiving units 4 for collecting products P intended for different destinations. The transport units 2 follow a closed loop track from the loading station LS to the discharging station DS and back to the loading station LS. Only a part of this track is shown in Figs. 1-4. Figs. 1-3 show a part of the apparatus 1 at the discharging station DS. The receiving units 4 are located behind each other in the conveying direction and next to the track.

The transport units 2 are coupled to each other and driven synchronously in the conveying direction X by driving means (not shown), for example a chain. In practice, the transport units 2 may be coupled to each other indirectly, for example each of the transport units 2 may be individually coupled to the driving means. The transport units 2 are pivotable with respect to each other such that a path which they follow may comprise bends in a horizontal plane. The path may be an endless path comprising two bends and two straight portions in a horizontal plane, but an alternatively shaped path is conceivable. It is also possible that the transport units 2 are also pivotable with respect to each other in a vertical plane such that a three-dimensional path can be followed.

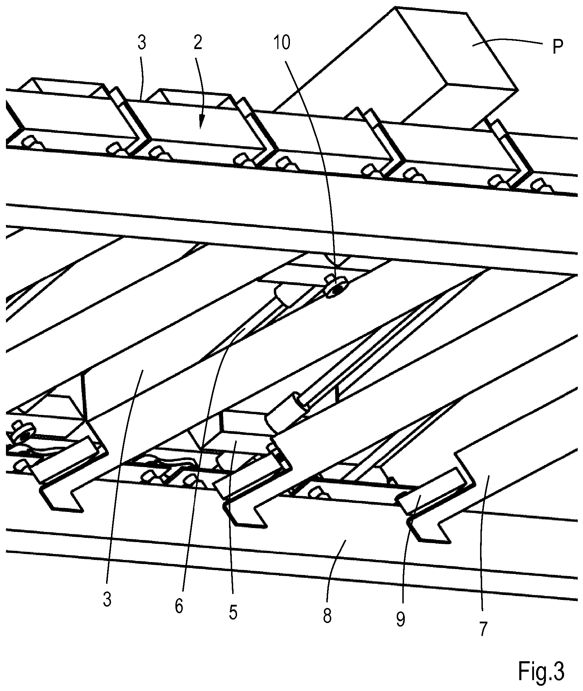

The apparatus 1 is adapted to discharge the products P at a selected receiving unit 4 at the discharging station DS in a controlled way. Each of the transport units 2 as shown in Figs. 1 and 2 comprises a pushing member 5 which is moveable in a transverse direction Y which is perpendicular to the conveying direction X. This allows to push a product P from the upper surface of the tray 3 at a desired receiving unit 4 at the discharging station DS. The pushing member 5 has an elongated rigid bar which extends in the conveying direction X and is located above the tray 3. The pushing member 5 surrounds the tray 3 and below the tray 3 it is slidably mounted to a pushing member guide 6, see Fig. 3. The pushing member guide 6 comprises a rod which is located below the tray and suitable for guiding the pushing member 5 in the transverse direction Y between a first extreme position EP1 and a second extreme position EP2, which positions are illustrated in Fig. 4. When a product P has to be removed from the upper surface of the tray 3 at the discharging station DS the pushing member 5 is moved in a direction from the first extreme position EP1 to the second extreme position EP2. The first extreme position EP1 and the second extreme position EP2 are the maximum possible positions of the pushing member 5 which is allowable by the pushing member guide 6.

The apparatus 1 also comprises a control system for driving the pushing members 5 of the respective transport units 2 along the pushing member guides 6. The control system has a plurality of oblique guides 7 at the discharging station DS. Each of the oblique guides 7 is inclined with respect to the conveying direction X and is fixed to a frame 8 of the apparatus 1 at a level below the trays 3 of the transport units 2. The transport units 2 are moved on top of the frame 8 when they follow the closed loop track, for example by wheels (not shown).

The control system is further provided with guide actuators 9 which are located at front ends of the respective oblique guides 7. The front end of an oblique guide 7 is passed earlier by a transport unit 2 when travelling in the conveying direction X than an opposite rear end thereof. Each of the pushing members 5 is provided with an actuator wheel 10 which can be guided along the guide actuators 9 and the oblique guides 7. The guide actuators 9 are switchable between an inactive condition and an active condition. In the inactive condition the actuator wheel 10 of a passing transport unit 2 will not touch the corresponding guide actuator 9, which means that the corresponding pushing member 5 will not be displaced. In the active condition the actuator wheel 10 of a passing transport unit 2 will touch the corresponding guide actuator 9 and follow the corresponding oblique guide 7, forcing the pushing member 5 to move in the transverse direction Y. Under operating conditions, the guide actuators 9 are switched in dependence of the selected receiving unit 4 where a product P should be discharged. Hence, each of the oblique guides 7 cooperates with a single receiving unit 4 at the discharging station DS. The location where a product P leaves the tray 3 at a receiving unit 4 depends on the location where the product P is located on the tray 3 in the transverse direction Y. At the rear end of the oblique guide 7 the actuator wheel 10 leaves the oblique guide 7 and can be moved back such that the pushing member 5 returns to the first extreme position EP1. All pushing members 5 can be returned by a single return guide (not shown) which is located downstream of the discharging station DS. Fig. 4 illustrates the locations of the actuator wheels 10 at one of the oblique guides 7 when the corresponding pushing member 5 is at the first extreme position EP1 and the second extreme position EP2.

Referring to Fig. 4 the control system of the apparatus 1 is provided with an offset guide 11 which is partly located upstream of the loading station LS. The offset guide 11 is fixed to the frame 8 and extends below the trays 3 of the transport units 2 such that all of the passing actuator wheels 10 of the respective transport units 2 engage the offset guide 11. The offset guide 11 forces the pushing members 5 to an intermediate position IP upon arriving at the loading station LS. The intermediate position IP is between the first extreme position EP1 and the second extreme position EP2. Fig. 4 shows that in this case the intermediate position IP is closer to the first extreme position EP1 than the second extreme position EP2. The intermediate position IP of the pushing member 5 at the loading station LS provides a limited region of the upper surface of the tray 3 for placing a product P onto the transport unit 2. The limited region extends between the intermediate position IP and the second extreme position EP2.

Fig. 4 shows that downstream of the loading station LS the pushing members 5 are moved from the intermediate position IP back to the first extreme position EP1 by the offset guide 11, hence creating a larger space on the tray 3. Although the resulting extended space is not used for receiving products, this provides the opportunity to use standardized components of the apparatus 1, such as the oblique guides 7, the guide actuators 9 and the transport units 2. Alternatively, the offset guide 11, the oblique guides 7 and the guide actuators 9 may be adapted such that the positions of the pushing members 5 remain at the intermediate position IP between the loading station LS and the discharging station DS. It is even possible that the positions of the pushing members 5 are never between the first extreme position EP1 and the intermediate position IP along the closed-loop track.

The limited region at the loading station LS creates a well-defined area where the operator can place a product P. If the apparatus 1 is applied for products P having a maximum dimension which does not need the entire upper surface of the tray 3, the offset guide 11 can be adapted such that the specific products P to be transported and sorted always fit within the limited region. The pushing member 5 will only touch a product P on the tray 3 when moving within the limited region which corresponds to a certain length in the transport direction X where the product P may leave the transport unit 2. This length decreases with a decreasing limited region. Hence, in case of relatively small products the required lengths of the receiving units 4 can be shortened. This is shown in Fig. 4 where the length of each receiving unit 7 in the conveying direction X is shorter than the distance between two successive oblique guides 7. This is possible since the pushing member 5 will not touch a product P on the tray 3 when it travels from the first extreme position EP1 to the intermediate position IP.

Fig. 4 shows that the offset guide 11 starts to move the pushing member 5 to the intermediate position IP at a distance from the loading station LS such that it is in the intermediate position IP when arriving at the loading station LS.

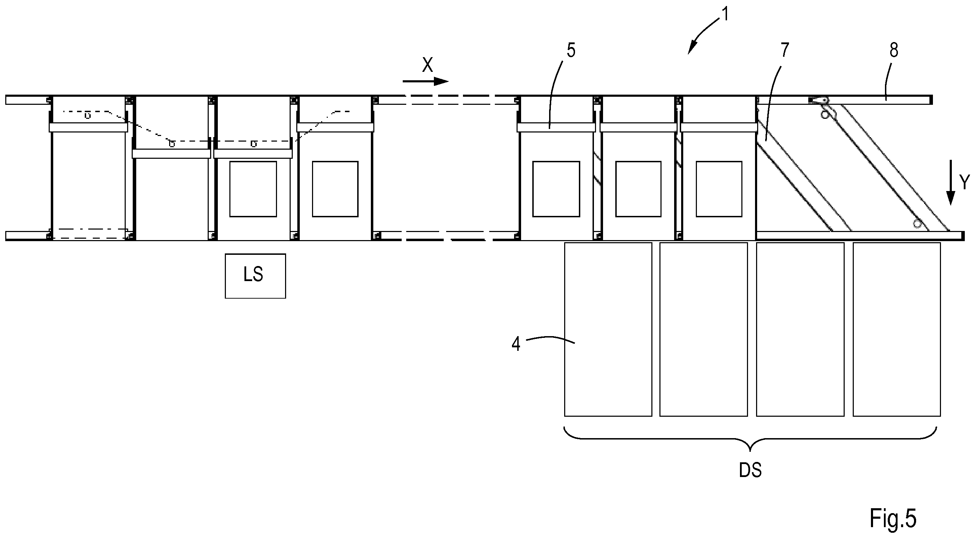

Fig. 5 shows an alternative embodiment in which the oblique guides 7 and the receiving units 4 are located closer to each other as seen in the conveying direction X than in the embodiment as shown in Fig. 4. This makes the discharging station DS of the apparatus 1 compact in the conveying direction X. The distance between two successive oblique guides 7 in the conveying direction X is smaller than a travelling distance of the transport unit 2 in the conveying direction X for displacing the pushing member 5 from the first extreme position EP1 to the second extreme position EP2.

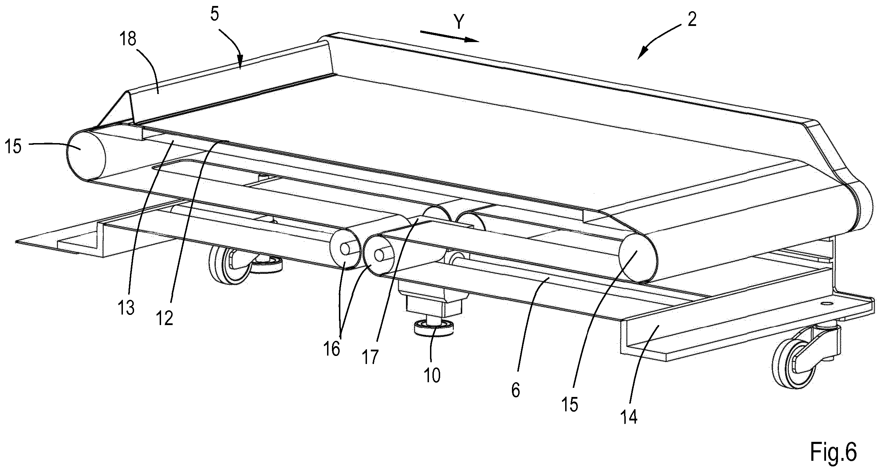

Fig. 6 shows a transport unit 2 of an alternative embodiment of the apparatus according to the invention. In this case the pushing member 5 is provided with a pushing element 18 and with a flexible cross-belt 12 onto which the pushing element 18 is mounted, which cross-belt 12 is drivable in the transverse direction Y. The upper surface for supporting a product is formed by an upper surface of the cross-belt 12 next to the pushing element 18 such that the pushing element 18 is suitable for pushing against a product on the cross-belt 12 in the event that a product on the cross-belt 12 tends to move with respect to the cross-belt 12 in opposite direction of the direction in which the cross-belt 12 moves.

The pushing element 18 is shown as an elongate bar having a triangular cross-section, but alternative embodiments are conceivable. The cross-belt 12 is supported by a supporting plate 13 which is part of a transport unit frame 14 of the transport unit 2. The cross-belt 12 is guided by two freely rotating rollers 15 which are mounted to the transport unit frame 14 at opposite sides of the transport unit 2 and by four freely rotating rollers 16 which are mounted to a slider or a carriage 17 that is movable along the pushing member guide 6. The pushing member guide 6 comprises a rod which is located below the supporting plate 13 and suitable for guiding the pushing element 18 of the pushing member 5 in the transverse direction Y between the first extreme position EP1 and the second extreme position EP2. The rod is fixed to the transport unit frame 14 and extends in the transverse direction Y.

Opposite ends of the cross-belt 12 are fixed to the transport unit frame 14. Furthermore, the cross-belt 12 is partly divided in its transverse direction in order to allow the carriage 17 to move between the divided portions. The cross-belt 12 is drivable through the actuator wheel 10, which is mounted to the carriage 17 and which can be guided along an oblique guide 7 as explained hereinbefore in relation to the other embodiments of the apparatus 1. In the embodiment as shown in Fig. 6 the arrangement of the cross-belt 12, the rollers 15, 16 and the carriage 17 is such that a displacement of the carriage 17 in one direction leads to a double displacement of the pushing element 18 in opposite direction. Hence, when moving the actuator wheel 10 to the left in Fig. 6 the pushing element 18 will move to the right. Similar to the embodiments as described hereinbefore the actuator wheel 10 can be guided by the offset guide 11 in order to locate the pushing element 18 at least at the loading station LS at the intermediate position IP between the first extreme position EP1 and the second extreme position EP2. It is noted that numerous alternative types of cross-belt arrangements are conceivable.

Under operating conditions a product on the upper surface of the cross-belt 12 may be discharged from the upper surface by driving the cross-belt 12 without any contact between the pushing bar 18 and the product. However, the pushing element 18 is mounted to the cross-belt 12 for pushing against a product on the cross-belt 12 in the event that a product on the cross-belt 12 tends to move with respect to the cross-belt 12 opposite to the direction in which the cross-belt 12 moves, for example caused by rolling or slipping.

The invention is not limited to the embodiments shown in the drawings and described hereinbefore, which may be varied in different manners within the scope of the claims. For example, the pushing members may be activated in a different way than through actuator wheels.

## Claims

1. An apparatus (1) for transport and controlled discharge of products (P), comprising at least a transport unit (2) including an upper surface for supporting a product (P), a loading station (LS) where a product can be placed on the upper surface, a discharging station (DS) where a product (P) can be discharged from the upper surface and driving means for transporting the transport unit (2) in a conveying direction (X) from the loading station (LS) to the discharging station (DS), wherein the transport unit (2) comprises a pushing member (5) for pushing a product (P) from the upper surface in transverse direction (Y) of the conveying direction (X) when the transport unit (2) is at the discharging station (DS), a pushing member guide (6) for guiding the pushing member (5) in the transverse direction (Y) between a first extreme position (EP1) and a second extreme position (EP2) for removing a product (P) from the upper surface when the pushing member (5) is moved in a direction from the first extreme position (EP1) to the second extreme position (EP2) and a control system (7, 9, 11) for selectively driving the pushing member (5) along the pushing member guide (6) during movement of the transport unit (2) in the conveying direction (X), wherein the control system (7, 9, 11) is adapted such that at least at the loading station (LS) the pushing member (5) is located at an intermediate position (IP) between the first extreme position (EP1) and the second extreme position (EP2), wherein the control system is provided with a plurality of oblique guides (7) located at a distance from each other in the conveying direction (X) at the discharging station (DS) and cooperating switchable guide actuators (9) for selectively directing an actuator element (10) of the pushing member (5) of the passing transport unit (2) to the corresponding oblique guide (7) so as to guide the actuator element (10) of the pushing member (5) along the selected oblique guide (7) upon passing the selected oblique guide (7), wherein the distance between two successive oblique guides (7) in the conveying direction (X) is smaller than a travelling distance of the transport unit (2) in the conveying direction (X) for displacing the pushing member (5) from the first extreme position (EP1) to the second extreme position (EP2), **characterized in that** the distance between two successive oblique guides (7) in the conveying direction (X) is equal to or larger than the travelling distance of the transport unit (2) in the conveying direction (X) for displacing the pushing member (5) from the intermediate position (IP) to the second extreme position (EP2).

2. An apparatus (1) according to claim 1, wherein the intermediate position (IP) is closer to the first extreme position (EP1) than the second extreme position (EP2).

3. An apparatus (1) according to claim 1 or 2, wherein the control system (7, 9, 11) is adapted such that the pushing member (5) is located at the first extreme position (EP1) or between the first extreme position (EP1) and the intermediate position (IP) when the actual position of the transport unit (2) is upstream of the loading station (LS).

4. An apparatus (1) according to any one of the preceding claims, wherein the control system (7, 9, 11) is adapted such that the pushing member (5) is located at the first extreme position (EP1) or between the first extreme position (EP1) and the intermediate position (IP) when the transport unit (2) arrives at the discharging station (DS).

5. An apparatus (1) according to any one of the preceding claims, wherein the apparatus (1) comprises a loop-shaped transport path such that the transport unit (2) successively follows the transport path from the loading station (LS) to the discharging station (DS) and back to the loading station (LS).

6. An apparatus (1) according to any one of the preceding claims, wherein the control system is provided with an offset guide (11) which is located at least upstream of the loading station (LS) and adapted such that it guides the pushing member (5) to the intermediate position (IP) upon passing the offset guide (11).

7. An apparatus (1) according to claim 6, wherein the offset guide (11) is adapted such that it guides the pushing member (5) from the first extreme position (EP1) to the intermediate position (IP) upon passing the offset guide (11).

8. An apparatus (1) according to any one of the preceding claims, wherein the apparatus is provided with receiving units (4) at the discharging station (DS) for receiving discharged product (P), wherein the length of each of the receiving units (4) in the conveying direction (X) is smaller than the distance between two successive oblique guides (7) in the conveying direction (X).

9. An apparatus (1) according to any one of the preceding claims, wherein the pushing member (5) is provided with a pushing element (18) for pushing a product (P) from the upper surface in transverse direction (Y) of the conveying direction (X) when the transport unit (2) is at the discharging station (DS) and with a flexible cross-belt (12) to which the pushing element (18) is mounted, which cross-belt (12) is drivable in the transverse direction (Y).

10. An apparatus (1) according to claim 9, wherein the cross-belt (12) is adapted such that the upper surface for supporting a product is formed by an upper surface of the cross-belt (12) next to the pushing element (18) such that the pushing element (18) is suitable for pushing against a product on the cross-belt (12) in the event that a product on the cross-belt (12) tends to move with respect to the cross-belt (12) in opposite direction of the direction in which the cross-belt (12) moves.

## Patentansprüche

1. Eine Vorrichtung (1) zum Transportieren und gesteuerten Abgeben von Produkten (P), die aufweist: wenigstens eine Transporteinheit (2), die eine obere Fläche zum Tragen eines Produkts (P) aufweist, eine Ladestation (LS), an der ein Produkt auf die obere Fläche gelegt werden kann, eine Entladestation (DS), an der ein Produkt (P) von der oberen Fläche entladen werden kann, und Antriebsmittel zum Transportieren der Transporteinheit (2) in einer Förderrichtung (X) von der Ladestation (LS) zu der Entladestation (DS), wobei die Transporteinheit (2) aufweist: ein Drückbauteil (5) zum Drücken eines Produkts (P) von der oberen Fläche in einer zu der Förderrichtung (X) transversalen Richtung (Y), wenn sich die Transporteinheit (2) an der Entladestation (DS) befindet, eine Drückbauteilführung (6) zum Führen des Drückbauteils (5) in der transversalen Richtung (Y) zwischen einer ersten extremen Position (EP1) und einer zweiten extremen Position (EP2) zum Entfernen eines Produkts (P) von der oberen Fläche, wenn das Drückbauteil (5) in einer Richtung von der ersten extremen Position (EP1) zu der zweiten extremen Position (EP2) bewegt wird, und ein Steuerungssystem (7, 9, 11) zum selektiven Antreiben des Drückbauteils (5) entlang der Drückbauteilführung (6) während einer Bewegung der Transporteinheit (2) in der Förderrichtung (X), wobei das Steuerungssystem (7, 9, 11) derart eingerichtet ist, dass zumindest an der Ladestation (LS) sich das Drückbauteil (5) in einer Zwischenposition (IP) zwischen der ersten extremen Position (EP1) und der zweiten extremen Position (EP2) befindet, wobei das Steuerungssystem bereitgestellt ist mit mehreren schrägen Führungen (7), die sich in einem Abstand voneinander in der Förderrichtung (X) an der Entladestation (DS) befinden, und zusammenwirkende schaltbare Führungsaktuatoren (9) zum selektiven Ausrichten eines Aktuatorelements (10) des Drückbauteils (5) der passierenden Transporteinheit an die korrespondierende schräge Führung (7), um das Aktuatorelement (10) des Drückbauteils (5) entlang der ausgewählten schrägen Führung (7) beim Passieren der ausgewählten schrägen Führung (7) zu führen, wobei der Abstand zwischen zwei aufeinanderfolgenden schrägen Führungen (7) in der Förderrichtung (X) kleiner ist als eine Fahrstrecke der Transporteinheit (2) in der Förderrichtung (X) zum Verlagern des Drückbauteils (5) von der ersten extremen Position (EP1) zu der zweiten extremen Position (EP2),
**dadurch gekennzeichnet, dass** der Abstand zwischen zwei aufeinanderfolgenden schrägen Führungen (7) in der Förderrichtung (X) gleich der oder größer als die Fahrstrecke der Transporteinheit (2) in der Förderrichtung (X) zum Verlagern des Drückbauteils (5) von der Zwischenposition (IP) zu der zweiten extremen Position (EP2) ist.

2. Eine Vorrichtung (1) nach Anspruch 1, wobei die Zwischenposition (IP) näher an der ersten extremen Position (EP1) als an der zweiten extremen Position (EP2) ist.

3. Eine Vorrichtung (1) nach Anspruch 1 oder 2, wobei das Steuerungssystem (7, 9, 11) derart eingerichtet ist, dass das Drückbauteil (5) sich in der ersten extremen Position (EP1) oder zwischen der ersten extremen Position (EP1) und der Zwischenposition (IP) befindet, wenn die tatsächliche Position der Transporteinheit (2) stromaufwärts der Ladestation (LS) ist.

4. Eine Vorrichtung (1) nach einem der vorangehenden Ansprüche, wobei das Steuerungssystem (7, 9, 11), derart eingerichtet ist, dass das Drückbauteil (5) sich in der ersten extremen Position (EP1) oder zwischen der ersten extremen Position (EP1) und der Zwischenposition (IP) befindet, wenn die Transporteinheit (2) an der Entladestation (DS) ankommt.

5. Eine Vorrichtung (1) nach einem der vorangehenden Ansprüche, wobei die Vorrichtung (1) einen schleifenförmigen Transportpfad aufweist, sodass die Transporteinheit (2) sukzessive dem Transportpfad von der Ladestation (LS) zu der Entladestation (DS) und zurück zu der Ladestation (LS) folgt.

6. Eine Vorrichtung (1) nach einem der vorangehenden Ansprüche, wobei das Steuerungssystem mit einer Versatzführung (11) bereitgestellt ist, die sich zumindest stromaufwärts der Ladestation (LS) befindet und derart eingerichtet ist, dass sie das Drückbauteil (5) zu der Zwischenposition (IP) auf ein Passieren der Versatzführung (11) hin führt.

7. Eine Vorrichtung (1) nach Anspruch 6, wobei die Versatzführung (11) derart eingerichtet ist, dass sie das Drückbauteil (5) von der ersten extremen Position (EP1) zu der Zwischenposition (IP) auf ein Passieren der Versatzführung (11) hin führt.

8. Eine Vorrichtung (1) nach einem der vorangehenden Ansprüche, wobei die Vorrichtung mit Empfangseinheiten (4) an der Entladestation (DS) zum Empfangen eines entladenen Produkts (P) bereitgestellt ist, wobei die Länge jeder der Empfangseinheiten (4) in der Förderrichtung (X) kleiner ist als der Abstand zwischen zwei aufeinanderfolgenden schrägen Führungen (7) in der Förderrichtung (X).

9. Eine Vorrichtung (1) nach einem der vorangehenden Ansprüche, wobei das Drückbauteil (5) bereitgestellt ist mit einem Drückelement (18) zum Drücken eines Produkts (P) von der oberen Fläche in einer zu der Förderrichtung (X) transversalen Richtung (Y), wenn die Transporteinheit (2) sich an der Entladestation (DS) befindet, und mit einem flexiblen Quergurt (12), an dem das Drückelement (18) montiert ist, welcher Quergurt (12) in der transversalen Richtung (Y) antreibbar ist.

10. Eine Vorrichtung (1) nach Anspruch 9, wobei der Quergurt (12) derart eingerichtet ist, dass die obere Fläche zum Tragen eines Produkts durch eine obere Fläche des Quergurts (12) in der Nähe des Drückelements (18) derart gebildet ist, dass das Drückelement (18) geeignet ist, gegen ein Produkt an dem Quergurt (12) zu drücken, falls ein Produkt an dem Quergurt (12) dazu neigt, sich in Bezug auf den Quergurt (12) in einer zu der Richtung, in der sich der Quergurt (12) bewegt, entgegengesetzten Richtung zu bewegen.

## Revendications

1. Appareil (1) de transport et de déchargement commandé de produits (P), comprenant au moins une unité de transport (2) incluant une surface supérieure pour supporter un produit (P), une station de chargement (LS) où un produit peut être placé sur la surface supérieure, une station de déchargement (DS) où un produit (P) peut être déchargé de la surface supérieure, et des moyens d'entraînement pour transporter l'unité de transport (2) dans une direction de convoyage (X) de la station de chargement (LS) à la station de déchargement (DS), dans lequel l'unité de transport (2) comprend un organe de poussée (5) pour pousser un produit (P) depuis la surface supérieure dans une direction transversale (Y) par rapport à la direction de convoyage (X) lorsque l'unité de transport (2) se trouve à la station de déchargement (DS), un guide d'organe de poussée (6) pour guider l'organe de poussée (5) dans la direction transversale (Y) entre une première position extrême (EP1) et une seconde position extrême (EP2) afin de retirer un produit (P) de la surface supérieure lorsque l'organe de poussée (5) est déplacé dans une direction de la première position extrême (EP1) à la seconde position extrême (EP2), et un système de commande (7, 9, 11) pour entraîner sélectivement l'organe de poussée (5) le long du guide d'organe de poussée (6) lors du déplacement de l'unité de transport (2) dans la direction de convoyage (X), dans lequel le système de commande (7, 9, 11) est adapté de manière à ce que, au moins au niveau de la station de chargement (LS), l'organe de poussée (5) se trouve à une position intermédiaire (IP) entre la première position extrême (EP1) et la seconde position extrême (EP2), dans lequel le système de commande est pourvu d'une pluralité de guides obliques (7) situés à distance les uns des autres dans la direction de convoyage (X) au niveau de la station de déchargement (DS) et d'actionneurs de guide commutables (9) coopérants pour diriger sélectivement un élément d'actionneur (10) de l'organe de poussée (5) de l'unité de transport (2) passante vers le guide oblique (7) correspondant, afin de guider l'élément d'actionneur (10) de l'organe de poussée (5) le long du guide oblique (7) sélectionné lors du passage du guide oblique (7) sélectionné, dans lequel la distance entre deux guides obliques (7) successifs dans la direction de convoyage (X) est inférieure à une distance de déplacement de l'unité de transport (2) dans la direction de convoyage (X) pour déplacer l'organe de poussée (5) de la première position extrême (EP1) à la seconde position extrême (EP2), **caractérisé en ce que** la distance entre deux guides obliques (7) successifs dans la direction de convoyage (X) est supérieure ou égale à la distance parcourue par l'unité de transport (2) dans la direction de convoyage (X) pour déplacer l'organe de poussée (5) de la position intermédiaire (IP) à la seconde position extrême (EP2).

2. Appareil (1) selon la revendication 1, dans lequel la position intermédiaire (IP) est plus proche de la première position extrême (EP1) que de la seconde position extrême (EP2).

3. Appareil (1) selon la revendication 1 ou 2, dans lequel le système de commande (7, 9, 11) est adapté de sorte que l'organe de poussée (5) soit situé à la première position extrême (EP1) ou entre la première position extrême (EP1) et la position intermédiaire (IP) lorsque la position réelle de l'unité de transport (2) est en amont de la station de chargement (LS).

4. Appareil (1) selon quelconque des revendications précédentes, dans lequel le système de commande (7, 9, 11) est adapté de manière à ce que l'organe de poussée (5) se trouve à la première position extrême (EP1) ou entre la première position extrême (EP1) et la position intermédiaire (IP) lorsque l'unité de transport (2) arrive à la station de déchargement (DS).

5. Appareil (1) selon quelconque des revendications précédentes, dans lequel l'appareil (1) comprend un trajet de transport en forme de boucle de sorte que l'unité de transport (2) suive successivement le trajet de transport de la station de chargement (LS) à la station de déchargement (DS) et de retour à la station de chargement (LS).

6. Appareil (1) selon quelconque des revendications précédentes, dans lequel le système de commande est pourvu d'un guide de décalage (11) qui est situé au moins en amont de la station de chargement (LS) et adapté de manière à guider l'organe de poussée (5) jusqu'à la position intermédiaire (IP) lors du passage du guide de décalage (11).

7. Appareil (1) selon la revendication 6, dans lequel le guide de décalage (11) est adapté de manière à guider l'organe de poussée (5) de la première position extrême (EP1) à la position intermédiaire (IP) lors du passage du guide de décalage (11).

8. Appareil (1) selon quelconque des revendications précédentes, dans lequel l'appareil est pourvu d'unités de réception (4) au niveau de la station de déchargement (DS) pour recevoir un produit déchargé (P), dans lequel la longueur de chacune des unités de réception (4) dans la direction de convoyage (X) est inférieure à la distance entre deux guides obliques (7) successifs dans la direction de convoyage (X).

9. Appareil (1) selon quelconque des revendications précédentes, dans lequel l'organe de poussée (5) est pourvu d'un élément de poussée (18) pour pousser un produit (P) depuis la surface supérieure dans la direction transversale (Y) par rapport à la direction de convoyage (X) lorsque l'unité de transport (2) se trouve à la station de déchargement (DS), et d'une courroie transversale flexible (12) sur laquelle l'élément de poussée (18) est monté, cette courroie transversale (12) pouvant être entraînée dans la direction transversale (Y).

10. Appareil (1) selon la revendication 9, dans lequel la courroie transversale (12) est adaptée de manière à ce que la surface supérieure destinée à supporter un produit soit formée par une surface supérieure de la courroie transversale (12) adjacente à l'élément de poussée (18), de sorte que l'élément de poussée (18) soit apte à pousser un produit sur la courroie transversale (12) dans le cas où un produit sur la courroie transversale (12) tend à se déplacer par rapport à la courroie transversale (12) dans une direction opposée à celle dans laquelle la courroie transversale (12) se déplace.
